# EUROPEAN PATENT SPECIFICATION

(11) **EP 0 703 854 B1**
(45) Date of publication and mention of the grant of the patent: **30.06.1999**
(21) Application number: 94916376.0
(22) Date of filing: 18.04.1994
(51) Int. Cl.: B29C 49/48, B29C 49/00

(54) **APPARATUS FOR PRODUCING A COMPONENT OBTAINED FROM TWO THERMOPLASTIC SHEETS**
VORRICHTUNG ZUM HERSTELLEN EINES GEGENSTANDES AUS ZWEI THERMOPLASTISCHEN FOLIEN
APPAREIL DE PRODUCTION D'UN ELEMENT OBTENU A PARTIR DE DEUX FEUILLES THERMOPLASTIQUES

(43) Date of publication of application: 03.04.1996
(73) Proprietor: Cesano, Franco, I-10060 San Secondo di Pinerolo (IT)
(72) Inventor: Cesano, Franco, I-10060 San Secondo di Pinerolo (IT)
(74) Representative: Marchitelli, Mauro
(86) International application number: IT9400045
(87) International publication number: WO9528271

(56) References cited:
- WO-A-87/06809
- WO-A-90/02645
- PATENT ABSTRACTS OF JAPAN vol. 82 no. 38 (M-335) ,31 October 1984 & JP,A,59 118435 (HIROSHI FUKUDA) 9 July 1984,

## Description

The present invention relates to an apparatus for producing a component, particularly for internal fittings for motor-vehicles, according to the pre-characterising portion of claim 1, which is known from JP-A-59-118435.

This document shows an apparatus for manufacturing the suction pipe of an internal combustion engine. A cylindrical parison is extruded through an extruding die and is then blow molded in an apparatus comprising a pair of split molds and a pair of slide molds movable in a direction orthogonal to the closure direction of the split molds.

The object of the present invention is to provide an apparatus of the above mentioned type which can produce a component formed by two sheets of thermoplastic material joined together, having a thickened edge and wherein the junction zone between the two sheets is in a position which is not visible when the component is mounted.

According to the present invention, this object is achieved by an apparatus according to claim 1.

Although the invention has been developed in the specific case of a component constituting the storage compartment for a motor-vehicle door, it is not restricted to this specific area and can be applied in all cases in which the problem arises of producing a component formed of two sheets joined together with a thickened edge and in which it is desired to position the connection line in a zone which is not visible when the component is in its position of use.

Further characteristics and advantages of the present invention will become clear from the following detailed description, given purely by way of non-limiting example, with reference to the appended drawings, in which:
- Figure 1 is a schematic perspective view of a motor-vehicle door, provided with a component obtained by the apparatus according to the invention;
- Figure 1a is a schematic section along the line I-I of Figure 1;
- Figure 2 is a schematic side view of an apparatus according to the invention; and
- Figures 3 and 4 are schematic side views illustrating the apparatus of Figure 2 in two different operating stages.

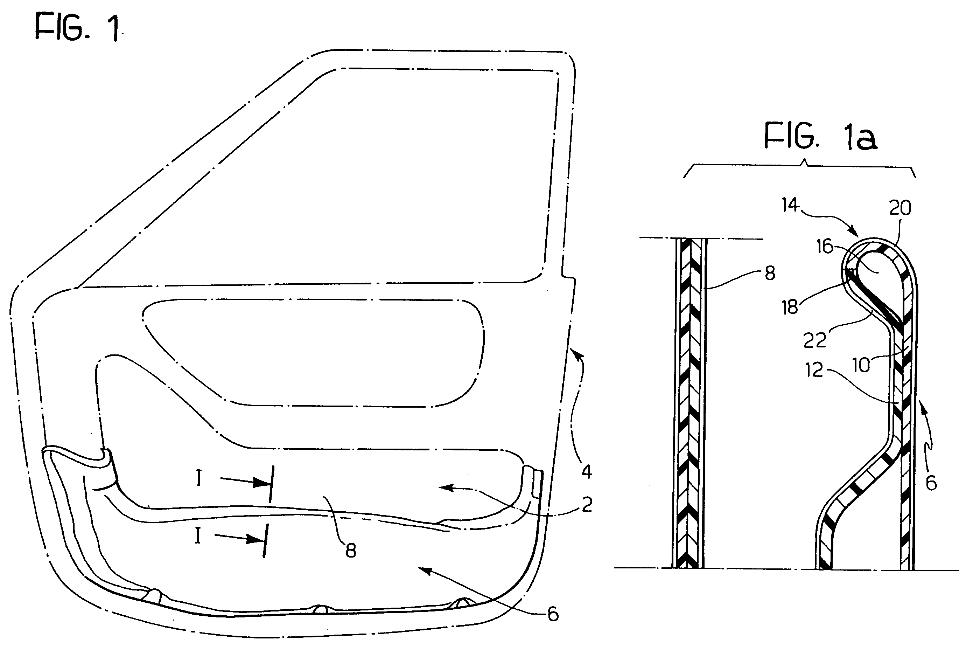

Referring to Figures 1 and 1a, a cover panel applied to the inner part of a vehicle door 4 is indicated 2. The cover panel 2 has a component 6 which is spaced from a wall 8 of the panel so as to form a storage compartment. The component 6 can be separate from or integral with the panel 2.

Referring in particular to Figure 1a, the component 6 comprises two sheets of thermoplastic material, indicated 10 and 12, which form a thickened edge 14 with a cavity 16. The sheets 10, 12 are joined together in correspondence with the thickened edge 14 along a Junction zone 18. An aesthetic covering 20 which extends to the Junction zone 18 is applied to the outer surface of the sheet 10. A second covering 22 may also be applied to the surface of the sheet 12 which faces the interior of the storage compartment.

For aesthetic reasons, the Junction zone 18 between the sheets 10, 12 and between the coverings 20, 22 should be located in a position which is not visible when the panel is assembled.

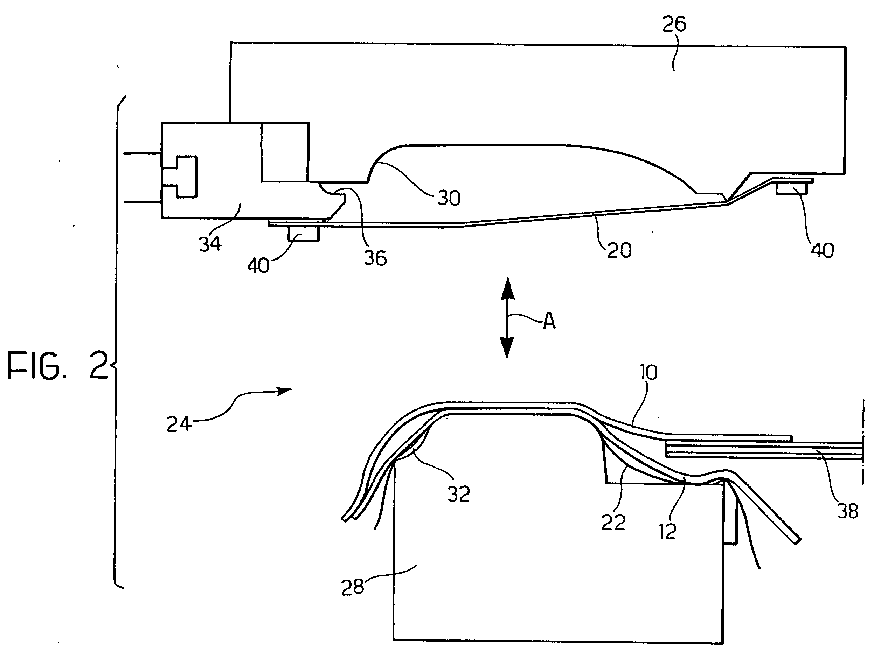

Referring now to Figures 2 to 4, an apparatus for producing the component 6 is indicated 24. The apparatus 24 comprises an upper die 26 and a lower die 28 capable of relative movement in the directions indicated by the double arrow A in Figure 2. In order to shape the edge 14 of the component 6, the dies 26 and 28 have respective working surfaces, indicated 30 and 32.

A slide 34 is able to move in a direction at right angles to the closure direction of the dies 26, 28 and has a working surface 36 which is intended to form a connection between the working surfaces 30 and 32. The movement of the slide 34 is independent of the relative movement between the dies 26, 28 and is controlled by a pressurized-fluid actuator, not shown in the drawings.

Referring to Figure 2, the covering 22, if used, for the inner surface of the component 6, the inner sheet 12 and the outer sheet 10 are placed in order on the lower die 28. The sheets 10, 12 have previously been heated such that they assume a semiplastic state. Between the sheets 10, 12 is a nozzle 38 for delivering compressed air which, in the preliminary stage shown in Figure 2, delivers a jet of low intensity sufficient to prevent the two sheets 10, 12 from adhering to one another. The covering 20 for the outer sheet 10 is held taut by a frame 40 carried, for example, by the upper die 26.

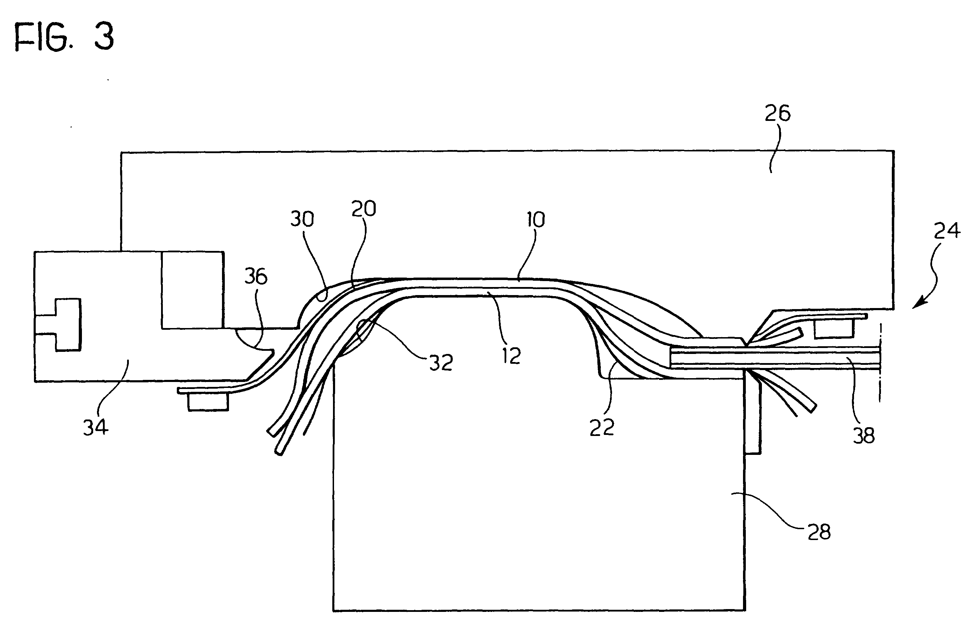

In the operating stage shown in Figure 3, the two dies 26, 28 are brought into their closed configuration and compressed air continues to be delivered at a relatively low intensity through the nozzle 38.

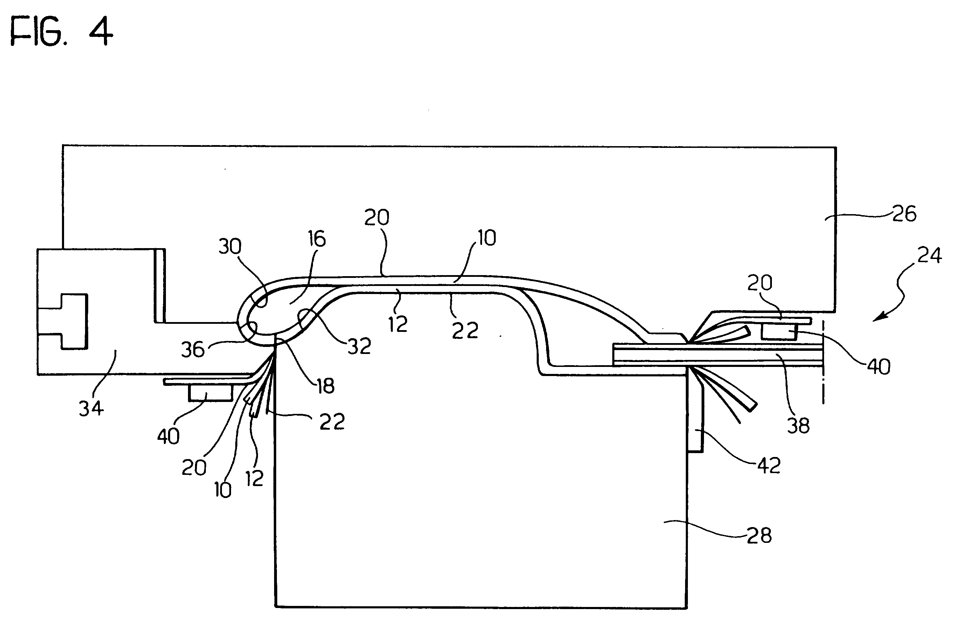

Subsequently, as Figure 4 shows, the slide 34 is brought into the closed configuration in which the working surface 36 connects the surfaces 30, 32. The edges of the coverings 20 and 22 and of the sheets 10 and 12 extend beyond the moulding zone into the space defined between the slide 34 and the lower die 28. Initially, the slide 34 is urged against the lower die with a relatively low force, sufficient to ensure fluid-tightness between the adjacent edges of the sheets 10, 12 but not high enough to cut the sheets 10, 12. In this state, compressed air is delivered at high pressure through the nozzle 38 such that the sheets 10, 12 are urged against a shaping surface defined by the working surfaces 30, 32 and 36. In this respect, it should be noted that passages (not shown) connecting the cavity 16 to the nozzle 38 are provided between the adjacent central portions by the sheets 10, 12.

At the end of the moulding process brought about by the effect of the strong jet of compressed air, the force at which the slide 34 is pressed against the lower die 38 is increased so as to cut the edges of the coverings 20, 22 and of the sheets 10, 12. On the other side of the die, the edges of the sheets 10, 12 and of the coverings 20, 22 are cut by a blade 42 which can move parallel to the closure direction of the dies 26, 28. The dies 26, 28 are then opened and the slide 34 is moved into its retracted position such that the finished component can be extracted.

It will be understood from the above description that the slide 34 with the connecting working surface 36 enables the Junction zone 18 to be provided between the sheets 10, 12 in a plane substantially parallel to the closure direction of the two dies 26, 28 and thus in a position which is not visible when the component 6 is in the normal position of use.

## Claims

1. Apparatus for producing a component, particularly for internal fittings of motor-vehicles, the apparatus (24) comprising:
- an upper die (26) and a lower die (28), having respective working surfaces (30, 32) and movable with respect to each other along a closure direction (A),
- a slide (34) which is movable at right angles with respect to said closure direction (A) and having a working surface (36) which connects the working surfaces (30, 32) of the upper and lower die (26, 28), and
- means (38) for delivering a jet of compressed air inside the component to be formed, so that, in use, the component is urged against a shaping surface consisting of the working surfaces (30, 32, 36) of the upper and lower dies (26, 28) and of the slide (34) by the effect of the delivery of compressed air,
caracterized in that the component is obtained from two sheets (10, 12) of thermoplastic material joined together, and that the apparatus is arranged so that, in use, the junction zone (18) between the two sheets (10, 12) is disposed in correspondence with a connection line between the working surface (36) of the slide (34) and the working surface (32) of one of the dies (26, 28).

2. Apparatus according to Claim 1, characterized in that the slide (34) is disposed so as to cut the sheets (10, 12) in correspondence with the junction zone (18) between the sheets (10, 12).

3. Apparatus according to any one of the preceding claims, characterized in that it comprises a frame (40) carrying an aesthetic covering (20) which is applied to the outer surface of one of the sheets (10) at the same time as the sheets (10, 12) are pressed.

4. Apparatus according to any one of the preceding claims, characterized in that the slide (34), together with one of the dies (28), defines a junction zone (18) between the two sheets (10, 12) in a plane substantially parallel to the closure direction of the two dies (26, 28).

## Patentansprüche

1. Vorrichtung zum Herstellen eines Gegenstands, insbesondere für das Innenzubehör von Kraftfahrzeugen, wobei die Vorrichtung (24) umfaßt:
- eine obere Form (26) und eine untere Form (28), die jeweils eine Arbeitsfläche (30, 32) aufweisen und entlang einer Schließrichtung (A) zueinander beweglich sind,
- einen Schieber (34), der im rechten Winkel zu der Schließrichtung (A) verschiebbar ist und eine Arbeitsfläche (36) aufweist, die die Arbeitsflächen (30, 32) der oberen und unteren Form (26, 28) verbindet, und
- eine Einrichtung (38) zur Lieferung eines Druckluftstrahls in den zu formenden Gegenstand hinein, so daß der Gegenstand im Einsatz durch die Wirkung der Druckluftlieferung gegen eine aus den Arbeitsflächen (30, 32, 36) der oberen und der unteren Form (26, 28) und des Schiebers (34) bestehende Formgebungsfläche gedrückt wird,
dadurch gekennzeichnet, daß
der Gegenstand aus zwei zusammengefügten Folienplatten (10, 12) aus thermoplastischem Material erhalten wird, und daß die Vorrichtung derart angeordnet ist, daß die Stoßzone (18) zwischen den beiden Folienplatten (10, 12) korrespondierend mit einer Verbindungslinie zwischen der Arbeitsfläche (36) des Schiebers (34) und der Arbeitsfläche (32) einer der Formen (26, 28) angeordnet ist.

2. Vorrichtung nach Anspruch 1, dadurch gekennzeichnet, daß der Schieber (34) derart angeordnet ist, daß er die Folienplatten (10, 12) korrespondierend mit der Stoßzone (18) zwischen den Folienplatten (10, 12) schneidet.

3. Vorrichtung nach einem der vorhergehenden Ansprüche, dadurch gekennzeichnet, daß sie einen Rahmen (40) umfaßt, der eine ästhetische Abdeckung (20) trägt, die gleichzeitig mit dem Pressen der Folienplatten (10, 12) auf die Außenfläche einer der Folienplatten (10) aufgebracht wird.

4. Vorrichtung nach einem der vorhergehenden Ansprüche, dadurch gekennzeichnet, daß der Schieber (34) zusammen mit einer der Formen (28) eine Stoßzone (18) zwischen den beiden Folienplatten (10, 12) in einer zur Schließrichtung der beiden Formen (26, 28) im wesentlichen parallelen Ebene definiert.

## Revendications

1. Appareil pour produire un composant, particulièrement pour des garnitures internes de véhicules à moteur, l'appareil (24) comprenant :
- une matrice supérieure (26) et une matrice inférieure (28) ayant des surfaces de façonnage respectives (30, 32) et mobiles l'une par rapport à l'autre le long d'un sens de fermeture (A),
- une glissière (34) qui est mobile à angles droits par rapport audit sens de fermeture (A) et ayant une surface de façonnage (36) qui relie les surfaces de façonnage (30, 32) des matrices supérieure et inférieure (26, 28), et
- des moyens (38) pour délivrer un jet d'air comprimé à l'intérieur du composant à former, de sorte que, en fonctionnement, on presse le composant contre une surface de mise en forme constituée des surfaces de façonnage (30, 32, 36) des matrices supérieure et inférieure (26, 28) et de la glissière (34) par l'effet de la délivrance de l'air comprimé,
caractérisé en ce que l'on obtient le composant à partir des deux feuilles jointes (10, 12) de matière thermoplastique, et en ce que l'appareil est conçu de sorte que, en fonctionnement, la zone de jonction (18) entre les deux feuilles (10, 12) est disposée en correspondance avec une ligne de connexion entre la surface de façonnage (36) de la glissière (34) et la surface de façonnage (32) de l'une des matrices (26, 28).

2. Appareil selon la revendication 1, caractérisé en ce que la glissière (34) est disposée de façon à découper les feuilles (10, 12) en correspondance avec la zone de jonction (18) entre les feuilles (10, 12).

3. Appareil selon l'une quelconque des revendications précédentes, caractérisé en ce qu'il comprend un cadre (40) portant un revêtement esthétique (20) que l'on applique à la surface extérieure de l'une des feuilles (10) au moment même où on presse les feuilles (10, 12).

4. Appareil selon l'une quelconque des revendications précédentes, caractérisé en ce que la glissière (34), en même temps que l'une des matrices (28), définit une zone de jonction (18) entre les deux feuilles (10, 12) dans un plan sensiblement parallèle au sens de fermeture des deux matrices (26, 28).
